(19) Europäisches Patentamt
European Patent Office
Office européen des brevets

(11) **EP 3 962 162 A2**

(12) **EUROPEAN PATENT APPLICATION**

(43) Date of publication:
**02.03.2022 Bulletin 2022/09**

(21) Application number: **21185933.5**

(22) Date of filing: **15.07.2021**

(51) International Patent Classification (IPC):
*H04W 28/08* (2009.01)   *H04L 49/00* (2022.01)
*H04L 47/00* (2022.01)   *H04W 92/20* (2009.01)

(52) Cooperative Patent Classification (CPC):
**H04L 49/9005; H04L 47/283; H04L 49/9057;
H04W 28/0808;** H04W 28/0975; H04W 92/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2020 KR 20200108540**

(71) Applicant: **Samsung Electronics Co., Ltd.
Suwon-si, Gyeonggi-do 16677 (KR)**

(72) Inventors:
• **JUN, Kyungjae**
  **16677 Suwon-si (KR)**
• **KIM, Seongjoon**
  **16677 Suwon-si (KR)**
• **KIM, Youngtaek**
  **16677 Suwon-si (KR)**

(74) Representative: **Mounteney, Simon James
Marks & Clerk LLP
15 Fetter Lane
London EC4A 1BW (GB)**

(54) **APPARATUS AND METHOD FOR IMPROVING OR OPTIMIZING BUFFER SIZE IN DUAL CONNECTIVITY**

(57)     A device for wireless communication of user equipment (UE) in a dual connection system includes a memory providing a buffer storing first data received from a first base station (BS) and second data received from a second BS and a first processor generating a radio bearer (RB) by reordering the first data and the second data and adjusting a size of the buffer based on a delay between the first BS and the second BS.

FIG. 7

EP 3 962 162 A2

**Description**

TECHNICAL FIELD

The present invention relates to a device for wireless communication of user equipment in a dual connection system, and to a method performed by a base station for wireless communication. More generally, the disclosure relates to wireless communication, and more particularly, to an apparatus and a method for improving or optimizing a buffer size in dual connectivity (DC).

BACKGROUND

In wireless communication, in order to increase throughput, various techniques may be adopted. For example, DC may be formed between a terminal and two or more base stations (BSs). DC may imply that the terminal consumes radio resources provided by the two or more BSs. Data split by one BS may be transmitted to the terminal through the two or more BSs and data split by the terminal may be transmitted to the two or more BSs and may be put together in one BS. The two or more BSs may be connected through a non-ideal backhaul interface. Therefore, it may be advantageous to more efficiently process a delay caused by an interface between BSs, in the DC.

SUMMARY

Claim 1 describes a device for wireless communication of user equipment in a dual connection system. Claim 10 describes a method performed by a first base station for wireless communication. Preferred embodiments are defined in the dependent claims.

Embodiments relate to an apparatus and a method for more efficiently using a buffer based on a delay of an interface between base stations (BSs).

According to an aspect, there is provided a device for wireless communication of user equipment (UE) in a dual connection system, the device including a memory providing a buffer storing first data received from a first BS and second data received from a second BS and a first processor generating a radio bearer (RB) by reordering the first data and the second data and adjusting a size of the buffer based on a delay between the first BS and the second BS.

According to an aspect, there is provided a method for wireless communication of UE in a dual connection system, the method including storing first data received from a first BS and second data received from a second BS in a first region in a memory, the first region being allocated to a buffer, generating a RB by reordering the first data and the second data, and adjusting a size of the first region based on a delay between the first BS and the second BS.

According to an aspect, there is provided a method performed by a first base station (BS) for wireless communication, the method including forming dual connectivity (DC) with a second BS and UE, identifying a delay between the first BS and the second BS, and transmitting a measured value corresponding to the identified delay to the UE.

BRIEF DESCRIPTION OF THE DRAWINGS

Example embodiments of the inventive concepts will be more clearly understood from the following detailed description taken in conjunction with the accompanying drawings in which:

FIG. 1 is a view illustrating a wireless communication system according to example embodiments of the inventive concepts;

FIG. 2 is a block diagram illustrating an example of a protocol stack according to example embodiments of the inventive concepts;

FIG. 3 is a timing diagram illustrating an example of packet data convergence protocol (PDCP) packet data units (PDUs) received by a PDCP entity in dual connectivity (DC) according to example embodiments of the inventive concepts;

FIGS. 4A and 4B are block diagrams illustrating examples of a wireless communication system according to example embodiments of the inventive concepts;

FIGS. 5A and 5B are timing diagrams illustrating examples of a buffering operation performed by user equipment (UE) for data reordering in accordance with comparative examples;

FIG. 6 is a block diagram illustrating base stations (BS) and UE in DC according to example embodiments of the inventive concepts;

FIG. 7 is a flowchart illustrating a method of improving or optimizing a buffer size in DC according to example embodiments of the inventive concepts;

FIG. 8 is a timing diagram illustrating an example of a buffering operation performed by UE for data reordering according to example embodiments of the inventive concepts;

FIGS. 9A and 9B are flowcharts illustrating examples of a method of improving or optimizing a buffer size in DC according to example embodiments of the inventive concepts;

FIGS. 10A and 10B are flowcharts illustrating examples of a method of improving or optimizing a buffer size in DC according to example embodiments of the inventive concepts;

FIG. 11 is a view illustrating a radio access network (RAN) according to example embodiments of the inventive concepts; and

FIGS. 12A and 12B are block diagrams illustrating examples of devices for wireless communication according to example embodiments of the inventive concepts.

DETAILED DESCRIPTION OF EXAMPLE EMBODIMENTS

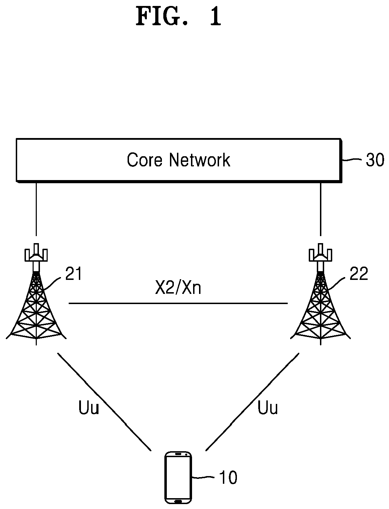

FIG. 1 is a view illustrating a wireless communication system according to example embodiments of the inventive concepts. For example, FIG. 1 illustrates a radio access network (RAN) and a core network 30. For example, the RAN may include an evolved UMTS terrestrial RAN (E-UTRAN) based on radio access technology (RAT) of long term evolution (LTE) or LTE-advanced (LTE-A) and the core network 30 may include an evolved packet core (EPC) so that an evolved packet system (EPS) may be implemented. In addition, the RAN may include a next generation (NG)-RAN based on a 5th generation (5G) new radio (NR) RAT and the core network 30 may include a 5G core (5GC) so that a 5G system (5GS) may be implemented.

A first or second base station (BS) 21 or 22 may generally refer to a fixed station communicating with user equipment (UE) 10 and another BS and may exchange data and control information by communicating with the UE 10 and/or another BS. For example, the first or second BS 21 or 22 may be referred to as a node B, an evolved-node B (eNB), a next generation node B (gNB), a sector, a site, a base transceiver system (BTS), an access point (AP), a relay node, a remote radio head (RRH), a radio unit (RU), or a small cell. In addition, the first or second BS 21 or 22 may be referred to as an ng-eNB that is an eNB interlockable with the 5GC and the gNB or an en-gNB interlockable with the EPC and the eNB. Herein, the first or second BS 21 or 22 or a cell may be interpreted as comprehensive meaning representing a partial area or function covered by a base station controller (BSC) in code division multiple access (CDMA), the node B in wideband code division multiple access (WCDMA), the eNB in LTE, or the gNB or the sector (the site) in 5G and may encompass various coverage areas such as a megacell, a macrocell, a microcell, a picocell, a femtocell, a relay node, the RRH, the RU, and a small cell communication range.

The UE 10 may refer to arbitrary devices that may be fixed or movable and that may communicate with the first or second BS 21 or 22 and may transmit and receive the data and/or the control information. For example, the UE 10 may be referred to as a terminal, terminal equipment, a mobile station (MS), a mobile terminal (MT), a user terminal (UT), a subscriber station (SS), a wireless device, or a handheld device. In addition, the UE 10 may refer to a vehicle in vehicle-to-everything (V2X).

Referring to FIG. 1, the UE 10 may be connected to the first BS 21 and the second BS 22 through a Uu interface. The RAN between the UE 10 and the first or second BS 21 or 22 may support communications among a plurality of users by sharing available network resources. For example, the RAN may adopt multiple access technology such as CDMA, frequency division multiple access (FDMA), time division multiple access (TDMA), orthogonal frequency division multiple access (OFDMA), single carrier frequency division multiple access (SC-FDMA), orthogonal frequency division multiplexing-frequency division multiple access (OFDM-FDMA), OFDM-TDMA, or OFDM-CDMA as a non-limiting example. The first BS 21 and the second BS 22 may be connected to each other through a non-ideal backhaul interface, for example, through an X2/Xn interface as illustrated in FIG. 1.

The UE 10 may form dual connectivity (DC) with the first BS 21 and the second BS 22. The DC may indicate that radio resources provided by two or more BSs are consumed by one UE 10. In the DC, one BS may be referred to as a master node (MN) and the other BS may be referred to as a secondary node (SN). Herein, it is assumed that the first BS 21 is the MN and the second BS 22 is the SN.

In the DC, the UE 10 and the first BS 21 and/or the second BS 22 may experience an inter-BS delay, that is, a delay caused by the X2/Xn interface between the first BS 21 and the second BS 22. For example, in downlink (DL) data transmission, when first data is transmitted from the first BS 21 to the UE 10 through the Uu interface and second data is transmitted from the first BS 21 to the UE 10 through the X2/Xn interface, the second BS 22, and the Uu interface, the UE 10 may receive the second data delayed due to the X2/Xn interface. At this time, the delay experienced by the UE 10 may include the delay of the X2/Xn interface and queuing delay in the second BS 22. Herein, the delay experienced by the UE 10 in the DC may be referred to as an inter-BS delay, the delay between the BSs or the delay caused by the X2/Xn interface or may be simply referred to as delay.

Like in the DL data transmission, in uplink (UL) data transmission, when the first data is transmitted from the UE 10 to the first BS 21 through the Uu interface and the second data is transmitted from the UE 10 to the first BS 21 through the Uu interface, the second BS 22, and the X2/Xn interface, the first BS 21 may receive the second data delayed due to the X2/Xn interface. Therefore, the UE 10 or the first BS 21 may receive data out-of-sequence.

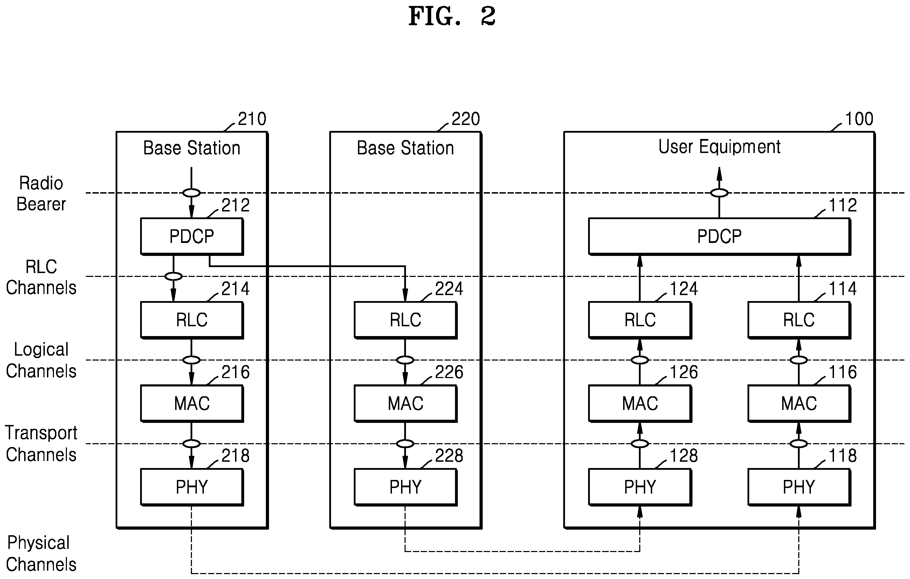

Each of the UE 10 and the first BS 21 and/or the second BS 22 may include a buffer for reordering data received out-of-sequence through different paths in the DC as described below with reference to FIG. 2. For example, in the DL data transmission, the UE 10 may generate a radio bearer (RB) by reordering the first data received from the first BS 21 and the second data received from the second BS 22 and may include a buffer storing the first data and/or the second data in order to reorder the first data and the second data. Likewise, in the UL data transmission, the first BS 21 may generate the RB by reordering the first data received from the UE 10 and the second data received from the second BS 22 and may include a buffer storing the first data and/or the second data in order to reorder the first data and the second data.

The RAT may regulate a total buffer size for reordering data in the UE 10, and the UE 10 may be required to include memory providing the total buffer size. For example, Document 1 "3GPP TS 38.306, NR; User Equipment (UE) radio access capabilities (Release 16)" regulates the UE 10 to provide a buffer of a size defined in the following [EQUATION 1] and [EQUATION 2] for DL data transmission.

[EQUATION 1]

$$MaxDLDataRate\_SN \ \times \ RLCRTT\_SN \ + \ MaxDLDataRate\_MN \ \times$$
$$(RLCRTT\_SN \ + \ X2/Xn \ delay \ + \ Queuing \ in \ SN)$$

[EQUATION 2]

$$MaxDLDataRate\_MN \ \times \ RLCRTT\_MN \ + \ MaxDLDataRate\_SN \times$$
$$(RLCRTT\_MN \ + \ X2/Xn \ delay \ + \ Queuing \ in \ MN)$$

[EQUATION 1] may correspond to a case in which a bearer split from the SN is generated, and [EQUATION 2] may correspond to a case in which a bearer split from the MN is generated. In [EQUATION 1] and [EQUATION 2], *MaxDLDataRate_MN* represents the maximum DL data speed of the MN, *MaxDLDataRate_SN* represents the maximum DL data speed of the SN, *RLCRTT_MN* represents an radio link control (RLC) retransmission time from the MN to the UE 10, *RLCRTT_SN* represents an RLC retransmission time from the SN to the UE 10, *X2/Xn delay* represents a delay generated by the X2/Xn interface between the MN and the SN, *Queuing in SN* represents a time spent on queuing in the SN, and *Queuing in MN* represents a time spent on queuing in the MN

In the DC, various scenarios may be generated and, as a memory region having a size less than the above-described total buffer size is used in accordance with a scenario, the memory region may be wasted. Hereinafter, as described below with reference to the drawings, in the DC, a size of a buffer used for reordering data may be improved or optimized based on the inter-BS delay, that is, the delay caused by the X2/Xn interface. Therefore, a memory region, which is secured due to the improved or optimized buffer size, may be reused and performances of the UE 10 and the first BS 21 and/or the second BS 22 may improve. In addition, due to the improved or optimized buffer size, memory capacity may be reduced and costs of the UE 10 and the first BS 21 and/or the second BS 22 may be reduced.

FIG. 2 is a block diagram illustrating an example of a protocol stack according to example embodiments of the inventive concepts. For example, the block diagram of FIG. 2 illustrates a part of a radio protocol architecture for a user plane during the DL data transmission in the DC formed by UE 100 with a first BS 210 and a second BS 220.

The first BS 210, the second BS 220, and the UE 100 may communicate with one another based on lower three layers, that is, a first layer L1, a second layer L2, and a third layer L3 of an open system interconnection (OSI) reference model. For example, as illustrated in FIG. 2, the first BS 210, the second BS 220, and the UE 100 may communicate with one another based on a physical (PHY) layer included in the first layer L1 and a medium access control (MAC) layer, a radio link control (RLC) layer, and a packet data convergence protocol (PDCP) layer included in the second layer L2. In addition, although not shown in FIG. 2, the first BS 210, the second BS 220, and the UE 100 may communicate with one another based on a radio resource control (RRC) layer and a non-access stratum (NAS) layer of a control plane included in the third layer L3. As illustrated in FIG. 2, the PHY layer may provide an information transfer service to an upper layer by using a physical channel and may be connected to the MAC layer through a transmission channel. In addition, the MAC layer may be connected to the RLC layer through a logic channel, the RLC layer may be connected to the PDCP layer through an RLC channel, and the PDCP layer may be connected to an upper layer through the RB.

The PDCP layer may perform transmission of user data, header compression, and ciphering. The RLC layer may perform concatenation, segmentation, and recombination of an RLC service data unit (SDU) and may support various modes in order to guarantee quality of service (QoS) required by the RB. The MAC layer may perform mapping between the logic channel and the transmission channel and multiplexing and demultiplexing between an MAC SDU and a transmission block. The PHY layer may transmit and receive information through the physical channel. For example, the physical layer may transmit and receive information through a physical downlink control channel (PDCCH), a physical downlink shared channel (PDSCH), a physical control format indicator channel (PCFICH), a physical hybrid ARQ indicator channel (PHICH), a physical uplink control channel (PUCCH), and a physical uplink shared channel (PUSCH).

The first BS 210 and the second BS 220 may include entities for performing the layers, respectively. For example, as illustrated in FIG. 2, the first BS 210 may include a PDCP entity 212, an RLC entity 214, an MAC entity 216, and/or a PHY entity 218. In addition, the second BS 220 may include an RLC entity 224, an MAC entity 226, and/or a PHY entity 228. The PDCP entity 212 of the first BS 210 may generate a PDCP packet data unit (PDU) to which a PDCP header is added by performing header compression and encryption on a PDCP SDU. The PDCP PDU may include a PDCP data PDU and a PDCP control PDU. The PDCP data PDU may carry user plane data and control plane data and PDCP SDU sequence numbers (SN) (or PDCP SNs). The PDCP control PDU may carry a PDCP status report and header compression control information.

When a multi-flow is formed in the DC, the PDCP entity 212 of the first BS 210 may split one RB so that a split bearer may be generated. For example, as illustrated in FIG. 2, the PDCP entity 212 may receive a packet corresponding to the RB and may generate PDCP PDUs from the received packet. The PDCP entity 212 may properly distribute and provide the PDCP PDUs to the RLC entity 214 of the first BS 210 and the RLC entity 224 of the second BS 220 based on a previously defined rule and/or an arbitrary method. The PDCP entity 212 of the first BS 210 may provide the PDCP PDUs to the RLC entity 224 of the second BS 220 through the X2/Xn interface as described above with reference to FIG. 1. The RLC entities 214 and 224 of the first and second BSs 210 and 220 may generate RLC PDUs from the PDCP PDUs, that is, RLC SDUs. The RLC PDUs may be transformed through the MAC entities 216 and 226 and the PHY entities 218 and 228 and may be transmitted to the UE 100.

The UE 100 may include a first RLC entity 114, a first MAC entity 116, and/or a first PHY entity 118 corresponding to the first BS 210 and may include a second RLC entity 124, a second MAC entity 126 and/or a second PHY entity 128 corresponding to the second BS 220. In addition, the UE 100 may include a PDCP entity 112 commonly corresponding to the first BS 210 and the second BS 220 and the PDCP entity 112 may receive the RLC SDUs, that is, the PDCP PDUs, from the first RLC entity 114 and the second RLC entity 124.

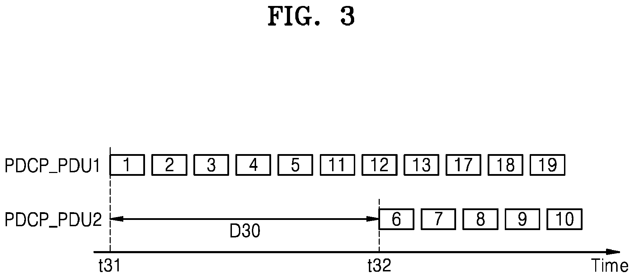

A delay occurring in a process of providing the PDCP PDU from the PDCP entity 212 of the first BS 210 to the RLC entity 224 of the second BS 220, that is, the delay caused by the X2/Xn interface, may cause a difference (that is, a time difference) between a point in time at which the PDCP entity 112 of the UE 100 receives the PDCP PDUs (that may be referred to as first data or first PDCP PDUs herein) from the first RLC entity 114 and a point in time at which the PDCP entity 112 of the UE 100 receives the PDCP PDUs (that may be referred to as second data or second PDCP PDUs herein) from the second RLC entity 124. Therefore, as described below with reference to FIG. 3, the PDCP PDUs may not be provided to the PDCP entity 112 in the order of the PDCP SNs. The PDCP entity 112 of the UE 100 may be required to provide the PDCP SDUs to an upper layer in the order of the PDCP SNs. Therefore, the PDCP entity 112 may reorder the PDCP PDUs provided by the first RLC entity 114 and the PDCP PDUs provided by the second RLC entity 124 in accordance with the PDCP SNs and the UE 100 may provide a buffer used for reordering the PDCP PDUs. Because the buffer is used in the second layer L2, the buffer may be referred to as a layer 2 buffer. Herein, the layer 2 buffer may be simply referred to as a buffer.

The split bearer generated by the DL data transmission described above with reference to FIG. 2 may be similarly generated in the UL data transmission. For example, when the multi-flow is formed in the DC, the PDCP entity 112 of the UE 100 may split one RB and may properly distribute and provide the PDCP PDUs to the first RLC entity 114 and the second RLC entity 124. Therefore, the PDCP entity 212 of the first BS 210 may receive the RLC SDUs, that is, the PDCP PDUs, from the RLC entity 214 of the first BS 210 and the RLC entity 224 of the second BS 220. Like the PDCP entity 112 of the UE 100, the PDCP entity 212 of the first BS 210 may also reorder the PDCP PDUs. In order to reorder the PDCP PDUs, the first BS 210 may provide a buffer used for reordering the PDCP PDUs. For example, for a plurality of UEs forming dual connectivity components related to the first BS 210, the first BS 210 may provide a buffer of a large size. Hereinafter, example embodiments of the inventive concepts will be described mainly with reference to the DL data transmission. However, example embodiments of the inventive concepts may also be applied to the UL data transmission.

FIG. 3 is a timing diagram illustrating an example of PDCP PDUs received by a PDCP entity in dual connectivity (DC) according to example embodiments of the inventive concepts. As described above with reference to FIG. 2, the PDCP entity 112 of the UE 100 may receive a first PDCP PDU PDCP_PDU1 from the first RLC entity 114 and may receive a second PDCP PDU PDCP_PDU2 from the second RLC entity 124. Hereinafter, FIG. 3 will be described with reference to FIG. 2.

Referring to FIG. 3, the PDCP entity 212 of the first BS 210 may provide PDCP PDUs corresponding to PDCP SNs 1, 2, 3, 4, 5, 11, 12, 13, 17, 18, and 19 to the RLC entity 214 so that the corresponding PDCP PDUs may be transmitted to the UE 100 through the Uu interface between the first BS 210 and the UE 100. In addition, the PDCP entity 212 of the first BS 210 may provide PDCP PDUs corresponding to PDCP SNs 6, 7, 8, 9, and 10 to the RLC entity 224 of the second BS 220 so that the corresponding PDCP PDUs may be transmitted to the UE 100 through the X2/Xn interface between the first BS 210 and the second BS 220 and through the Uu interface between the second BS 220 and the UE 100.

As illustrated in FIG. 3, the UE 100 (or the PDCP entity 112) may receive the PDCP PDU corresponding to the PDCP SN 1 from the first BS 210 at a time t31 and may subsequently and sequentially receive the PDCP PDUs corresponding to the PDCP SNs 2, 3, 4, 5, 11, and 12. The UE 100 (or the PDCP entity 112) may receive the PDCP PDU corresponding to the PDCP SN 6 from the second BS 220 at a time t32 and may subsequently and sequentially receive the PDCP PDUs corresponding to the PDCP SNs 7, 8, 9, and 10. Therefore, the UE 100 may receive the PDCP PDU corresponding to the PDCP SN 6 at the time t32 delayed from the time t31 by D30 and the delay D30 may be caused by the X2/Xn interface between the first BS 210 and the second BS 220 so that the delay D30 may vary in accordance with the BSs to which the UE 100 is connected.

The PDCP entity 112 of the UE 100 may reorder the PDCP PDUs. For example, the PDCP entity 112 of the UE 100 may provide the PDCP SDUs from the PDCP PDUs corresponding to the PDCP SNs 1, 2, 3, 4, and 5 to an upper layer and may store the PDCP PDUs corresponding to the PDCP SNs 11, 12, 13, 17, 18, and 19 (or the PDCP SDUs corresponding thereto) in a buffer. The PDCP entity 112 may provide the PDCP SDUs from the PDCP PDUs corresponding to the PDCP SNs 11, 12, 13, 17, 18, and 19, which are stored in the buffer to the upper layer after the PDCP entity 112 provides the PDCP SDUs from the PDCP PDUs corresponding to the PDCP SNs 6, 7, 8, 9, and 10 to an upper layer from the time t32.

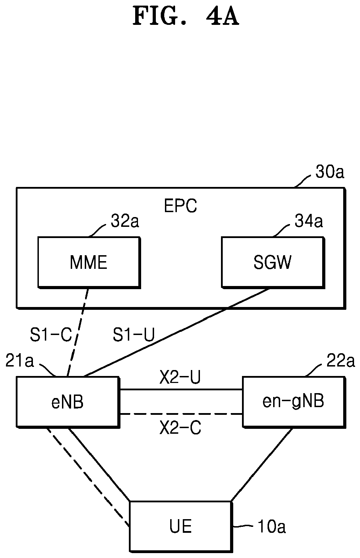

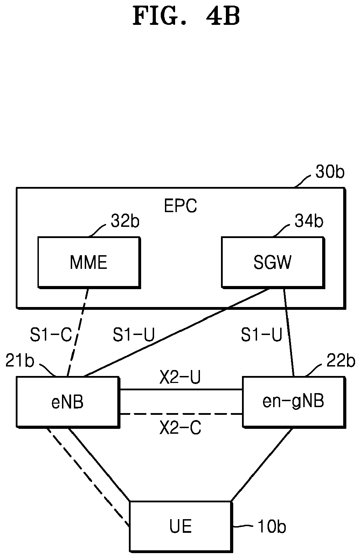

FIGS. 4A and 4B are block diagrams illustrating examples of a wireless communication system according to example embodiments of the inventive concepts. For example, the block diagrams of FIGS. 4A and 4B illustrate E-UTRA (Evolved-Universal Terrestrial Radio Access) -NR (EN)-DC as an example of DC and the EN-DC may correspond to option 3 of 5G deployment. In FIGS. 4A and 4B, solid lines may correspond to user planes and dashed lines may correspond to control planes. Hereinafter, description previously given with reference to FIGS. 4A and 4B will not be given.

Referring to FIG. 4A, an EPC 30a as a core network may include a mobility management entity (MME) 32a and a serving gateway (SGW) 34a. In some example embodiments, the EPC 30a may further include a home subscriber server (HSS), which is connected to the MME 32a, and a packet data network (PDN) gateway (PGW) which is connected to the SGW 34a and a PDN outside the EPC 30a. An eNB 21a as the MN may be connected to the MME 32a of the EPC 30a through an S1-C interface, may be connected to the SGW 34a of the EPC 30a through an S1-U interface, and may be connected to an en-gNB 22a through an X2-U interface and an X2-C interface. In addition, the en-gNB 22a as the SN may be connected to the eNB 21a through the X2-U interface and the X2-C interface. In an example of FIG. 4A, a bearer split from the eNB 21a may be generated.

Referring to FIG. 4B, an EPC 30b may include an MME 32b and an SGW 34b. An eNB 21b may be connected to the MME 32b through the S1-C interface, may be connected to the SGW 34b through the S1-U interface, and may be connected to an en-gNB 22b through the X2-U interface and the X2-C interface. In addition, the en-gNB 22b may be connected to the SGW 34b through the S1-U interface and may be connected to the eNB 21b through the X2-U interface and the X2-C interface. In an example of FIG. 4B, a bearer split from the en-gNB 22b may be generated.

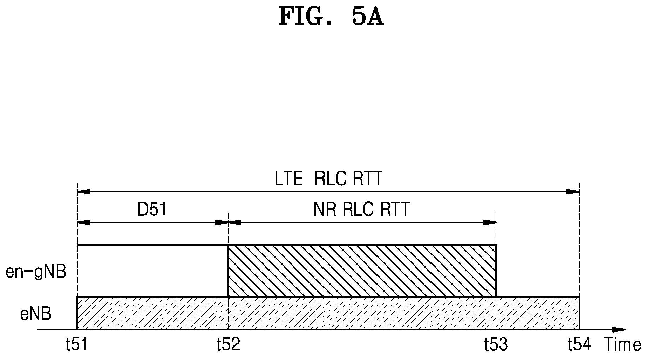

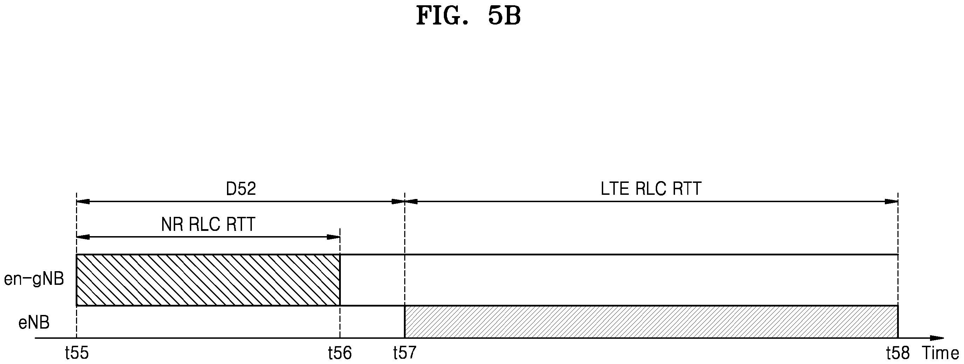

UEs 10a and 10b of FIGS. 4A and 4B may respectively experience different delays caused by an X2 interface (e.g., the X2-U interface and the X2-C interface.) as described below with reference to FIGS. 5A and 5B. Therefore, sizes of buffers required by the UEs 10a and 10b of FIGS. 4A and 4B may be different from each other and the UEs 10a and 10b of FIGS. 4A and 4B may not distinguish a configuration of FIG. 4A from a configuration of FIG. 4B in the DC. Therefore, a buffer of a size defined by the [EQUATION 1] and the [EQUATION 2] may cause waste of memory capacity in accordance with a configuration thereof. Hereinafter, example embodiments of the inventive concepts will be described mainly with reference to the EN-DC. However, example embodiments of the inventive concepts may also be applied to DC based on a single RAT, for example, LTE-DC or NR-DC as well as DC based on a multi-RAT (MR) (that is, MR-DC) such as the EN-DC, for example, NG-RAN E-UTRA-NR (NGEN)-DC or NR-E-UTRA (NE)-DC.

FIGS. 5A and 5B are timing diagrams illustrating examples of a buffering operation performed by UE for data reordering in accordance with comparative examples. For example, the timing diagram of FIG. 5A illustrates a buffering operation that may be performed for reordering data in the UE 10a of FIG. 4A and the timing diagram of FIG. 5B illustrates a buffering operation that may be performed for reordering data in the UE 10b of FIG. 4B. Hereinafter FIGS. 5A and 5B will be described with reference to FIGS. 4A and 4B and description previously given with reference to FIGS. 5A and 5B will not be given.

Referring to FIG. 5A, the UE 10a may store data received from the eNB 21a in a buffer during LTE RLC Round-Trip Time (RTT), that is, from a time t51 to a time t54. In addition, the UE 10a may store data received from the en-gNB 22a during NR RLC RTT, that is, from a time t52 to a time t53. As illustrated in FIG. 5A, the time t52 may correspond to a point in time delayed D51 from the time t51 due to the X2 interface between the eNB 21a and the en-gNB 22a. In accordance with Document 1, the LTE RLC RTT may be 75 ms, the NR RLC RTT may be 40 ms when subcarrier spacing (SCS) is 30 KHz, and a delay D51 may be 25 ms (*X2/Xn delay + Queuing in SN* = 25ms). Therefore, the UE 10a may store the data received from the eNB 21a and the en-gNB 22a for 75 ms total in the buffer and the buffer may be required to have a size for storing the corresponding data.

Referring to FIG. 5B, the UE 10b may store data received from the en-gNB 22b during the NR RLC RTT, that is, from a time t55 to a time t56. In addition, the UE 10b may store data received from the eNB 21b during the LTE RLC RTT, that is, from a time t57 to a time t58. As illustrated in FIG. 5B, the time t57 may correspond to a point in time delayed D52 from the time t55 due to the X2 interface between the eNB 21b and the en-gNB 22b. In accordance with Document 1, the LTE RLC RTT may be 75 ms, the NR RLC RTT may be 40 ms when the SCS is 30 KHz, and a delay D52 may be 55 ms (*X2/Xn delay + Queuing in MN* = 55ms). Therefore, the UE 10b may store the data received from the eNB 21b and the en-gNB 22b for 130 ms total (130ms = 55ms + 75ms) in the buffer and the buffer may be required to have a size for storing the corresponding data.

As described above, because buffer sizes required by the UEs may be different from each other and a delay caused by the X2/Xn interface may vary by BS, it may be inefficient for UE to always allocate a memory region corresponding to the maximum size of a buffer to reordering of data in DC. For example, in a case in which the UE 10b of FIG. 4B receives the data from the eNB 21b at a data rate of 2 Gbps and receives the data from the en-gNB 22b at a data rate of 5 Gbps, when the delay caused by the X2 interface is 45 ms, a buffer of an additional size of 39.375 MB may be required (39.375MB = 28.125MB + 11.25MB). Therefore, according to example embodiments of the inventive concepts, memory capacity of dozens of MB may be saved.

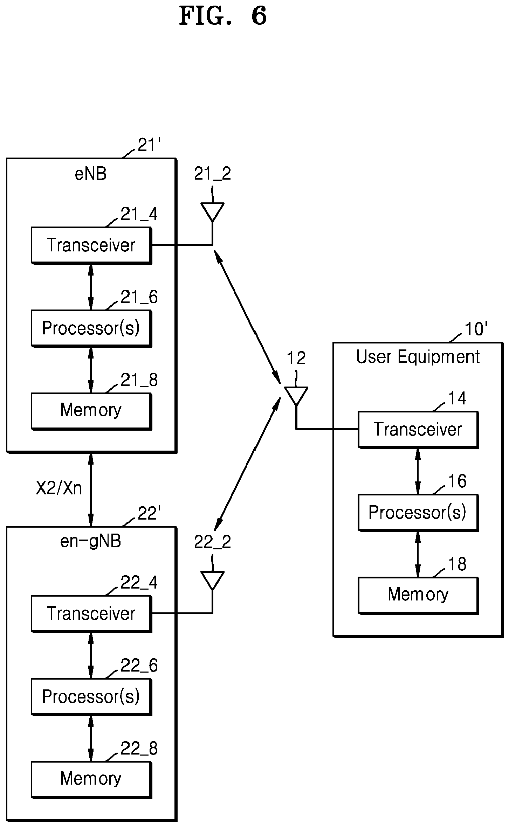

FIG. 6 is a block diagram illustrating base stations (BS) and UE in DC according to example embodiments of the inventive concepts. For example, the block diagram of FIG. 6 illustrates an eNB 21', an en-gNB 22', and UE 10' in the EN-DC. Hereinafter, description previously given with reference to FIG. 6 will not be given.

Referring to FIG. 6, the UE 10' may include an antenna 12, a transceiver 14, at least one processor 16, and/or a memory 18. The antenna 12 may receive a radio frequency (RF) signal transmitted by the eNB 21' and/or the en-gNB 22' in a receive (RX) mode and may transmit an RF signal provided by the transceiver 14 to the eNB 21' and/or the en-gNB 22' in a transmi t (TX) mode. In some example embodiments, the antenna 12 may be implemented by an antenna array including a plurality of antennas and/or as a package with the transceiver 14.

The transceiver 14 may generate a baseband (BB) signal by processing an RF signal received from the antenna 12 in the RX mode and may provide the BB signal to the at least one processor 16. In addition, the transceiver 14 may generate an RF signal by processing the BB signal provided by the at least one processor 16 in the TX mode and may output the RF signal to the antenna 12. In some example embodiments, the transceiver 14 may include a filter, a mixer, a power amplifier (PA), and/or a low noise amplifier (LNA) and may be referred to as a radio frequency integrated circuit (RFIC).

The at least one processor 16 may process the BB signal received from the transceiver 14 in the RX mode and may generate the BB signal and may provide the BB signal to the transceiver 14 in the TX mode. For example, the at least one processor 16 may include a demodulator, a decoder, an encoder, and/or a modulator and may perform functions of layers included in a protocol stack. For this purpose, the at least one processor 16 may include a logic block designed by logic synthesis and/or at least one core configured to execute a series of instructions. The at least one processor 16 may be referred to as a communication processor, a BB processor, or a modem and, may be referred to as a first processor herein.

The memory 18 may be accessed by the at least one processor 16, may store data provided by the at least one processor 16, and may provide the stored data to the at least one processor 16 in response to a request of the at least one processor 16. The memory 18 may include a volatile memory such as a static random access memory (SRAM) or a dynamic random access memory (DRAM) or a non-volatile memory such as a flash memory or a resistive random access memory (RRAM).

The at least one processor 16 may use at least a part of the memory 18 as a buffer for DC. For example, the at least one processor 16 may implement the PDCP entity 112 of FIG. 2 and the memory 18 may provide a buffer for reordering the PDCP PDUs in the DC. The at least one processor 16 may identify a delay caused by the X2/Xn interface between the eNB 21' and the en-gNB 22' and may adjust a size of a buffer based on the delay caused by the X2/Xn interface. Therefore, an region that is not allocated as a buffer in the memory 18 may be used for another function performed by the at least one processor 16 and, as a result, the at least one processor 16 may provide improved functions and the performance of the UE 10' may improve. In addition, the capacity of the memory 18 may be reduced so that cost of the UE 10' may be reduced.

As illustrated in FIG. 6, the eNB 21' may include an antenna 21_2, a transceiver 21_4, at least one processor 21_6, and/or a memory 21_8 like the UE 10'. The en-gNB 22' may also include an antenna 22_2, a transceiver 22_4, at least one processor 22_6, and/or a memory 22_8 like the UE 10'.

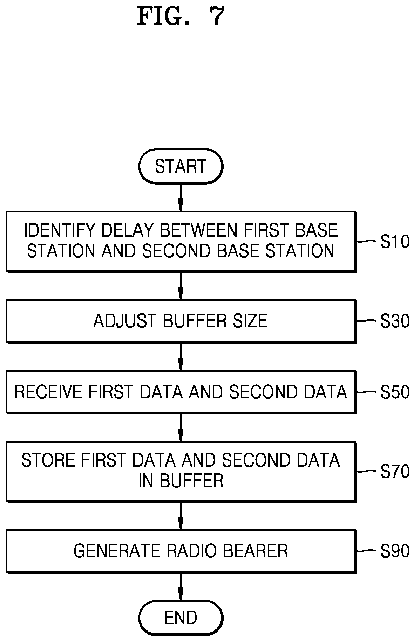

FIG. 7 is a flowchart illustrating a method of improving or optimizing a buffer size in DC according to example embodiments of the inventive concepts. As illustrated in FIG. 7, the method of improving or optimizing the buffer size in the DC may include a plurality of operations S10, S30, S50, S70, and/or S90. In some example embodiments, the method of FIG. 7 may be performed by the UE 10', the eNB 21', and/or the en-gNB 22' of FIG. 6. Hereinafter, it is assumed that the method of FIG. 7 is performed by the UE 10' of FIG. 6 and the method of FIG. 7 will be described with reference to FIG. 6

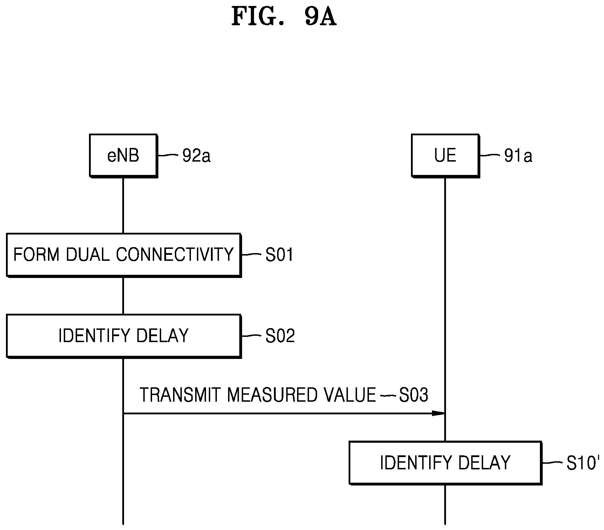

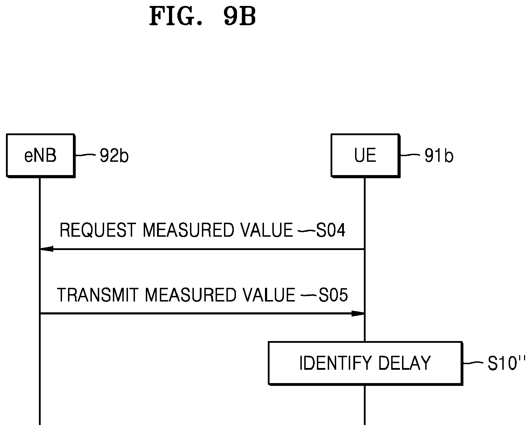

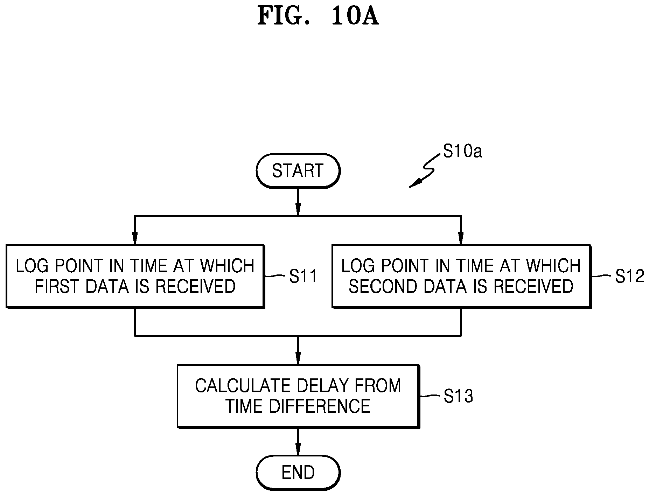

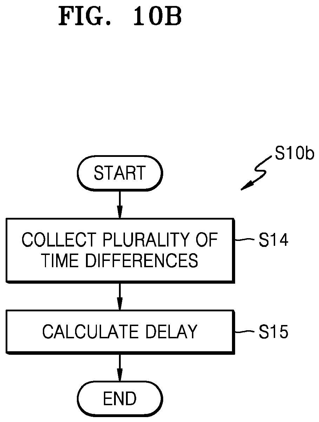

In operation S10, a delay between a first BS and a second BS may be identified. For example, the at least one processor 16 of the UE 10' may identify the delay caused by the X2/Xn interface between the eNB 21' and the en-gNB 22'. The at least one processor 16 may identify the delay caused by the X2/Xn interface by various methods, and examples of operation S10 will be described below with reference to FIGS. 9A, 9B, 10A, and 10B.

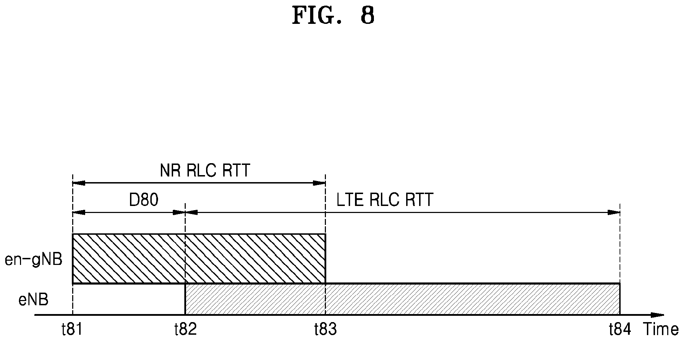

In operation S30, the buffer size may be adjusted. For example, the at least one processor 16 may allocate a partial region of the memory 18 to a buffer to be used for reordering data in the DC. The at least one processor 16 may adjust the buffer size based on the delay identified in operation S10 instead of allocating an region of the memory 18 corresponding to the maximum size of the buffer to the buffer based on a fixed delay. Therefore, an region of the memory 18 that is not allocated to the buffer may be used for other operations. An example of operation S30 will be described with reference to FIG. 8.

In operation S50, first data and second data may be received. Herein, for example, the UE 10' may receive the first data from the eNB 21' and may receive the second data from the en-gNB 22'. The first data and the second data may include the PDCP PDUs, and the UE 10' may receive the non-sequential PDCP PDUs.

In operation S70, the first data and the second data may be stored in the buffer. For example, the at least one processor 16 (or the PDCP entity) may store the first data and the second data in the buffer having the size adjusted in operation S30, that is, the region allocated to the buffer in the memory 18 Therefore, the memory 18 may store the PDCP PDUs (or the PDCP SDUs generated thereby).

In operation S90, an RB may be generated. For example, the at least one processor 16 may generate the RB by or based on reordering the first data and the second data stored in the buffer. That is, the at least one processor 16 (or the PDCP entity) may sequentially provide the PDCP SDUs to an upper layer by reordering the PDCP PDUs stored in the buffer (or the PDCP SDUs generated thereby). (Similarly any instance of 'reordering' herein may in embodi ments involve ordering SDUs according to their intended sequence). In an example e mbodiment, RB may include PDCP SDUs.

FIG. 8 is a timing diagram illustrating an example of a buffering operation performed by UE for data reordering according to example embodiments of the inventive concepts. For example, the timing diagram of FIG. 8 illustrates a buffering operation performed by using the buffer having the size adjusted in operation S30 of FIG. 7. In some example embodiments, the buffering of FIG. 8 may be performed by the at least one processor 16 included in the UE 10' of FIG. 6. Hereinafter, FIG. 8 will be described with reference to FIG. 6.

Referring to FIG. 8, the at least one processor 16 may store the data received from the en-gNB 22' in the region allocated to the buffer in the memory 18 during the NR RLC RTT, that is, from a time t81 to a time t83. In addition, the at least one processor 16 may store the data received from the eNB 21' in the region allocated to the buffer in the memory 18 during the LTE RLC RTT, that is, from a time t82 to a time t84. The at least one processor 16 may identify a delay D80 between the eNB 21' and the en-gNB 22' of FIG. 6 and the delay D80 may be less than the delay D52 of FIG. 5B. For example, when the delay D80 is 10 ms (10 ms < 55 ms), the at least one processor 16 may store the data received from the eNB 21' and the en-gNB 22' for 85 ms total in the buffer and a buffer of a reduced size may be allocated in the memory 18 in order to store the corresponding data.

FIGS. 9A and 9B are flowcharts illustrating examples of a method of improving or optimizing a buffer size in DC according to example embodiments of the inventive concepts. For example, the flowcharts of FIGS. 9A and 9B illustrate examples of an operation of a BS providing a measured value corresponding to a delay between BSs to UE and the UE may identify the delay between the BSs based on the measured value provided by the BS. Hereinafter, description previously given with reference to FIGS. 9A and 9B will not be given.

Referring to FIG. 9A, in operation S01, an eNB 92a may form DC. For example, the eNB 92a may form the EN-DC with an en-gNB and UE 91a and may function as the MN in the EN-DC.

In operation S02, the eNB 92a may identify the inter-BS delay. For example, the eNB 92a may identify the delay between the eNB 92a and the en-gNB. In some example embodiments, the eNB 92a may measure an X2/Xn delay and may identify at least one of queuing in the eNB 92a and queuing in the en-gNB. The eNB 92a may calculate the delay between the eNB 92a and the en-gNB based on at least one of the X2/Xn delay, the queuing in the eNB 92a and the queuing in the en-gNB. In some example embodiments, the eNB 92a may measure the inter-BS delay. For example, the eNB 92a may measure the delay between the eNB 92a and the en-gNB based on a difference between a point in time at which data is received from the UE 91a and a point in time at which data is received from the UE 91a via the en-gNB during the UL data transmission in the DC. In some example embodiments, the eNB 92a may include a memory storing the delay between the eNB 92a and the en-gNB instead of measuring the delay and the delay between the eNB 92a and the en-gNB may be read from the memory.

In operation S03, the eNB 92a may transmit the measured value to the UE 91a. For example, the eNB 92a may transmit a value corresponding to the delay identified in operation S02 and that may be identified by the UE 91a to the UE 91a as the measured value. The eNB 92a may transmit the measured value to the UE 91a by using arbitrary methods, for example, may transmit the measured value to the UE 91a through an arbitrary message that may be provided from the eNB 92a to the UE 91a such as RRC signaling (for example, an RRC message) or MAC signaling (for example, an MAC control element). In an example embodiment, the measured value may be included in at least one of RRC signaling and MAC signaling.

In operation S10', the UE 91a may identify the delay. For example, the UE 91a may identify the delay based on the measured value received from the eNB 92a. In some example embodiments, the measured value received from the eNB 92a may include an index indicating one of a plurality of delays included in a table shared by the eNB 92a and the UE 91a may identify the delay corresponding to the index in the table. In some example embodiments, the measured value received from the eNB 92a may include a value of a variable included in an equation shared by the eNB 92a and the UE 91a may identify the delay by substituting the measured value for the equation.

Referring to FIG. 9B, in operation S04, UE 91b may request an eNB 92b for the measured value. For example, when handover occurs or it is necessary to secure an additional memory region, the UE 91b may request the eNB 92b for the measured value corresponding to a delay between the eNB 92b and an en-gNB. The UE 91b may transmit the request through an arbitrary message that may be provided to the eNB 92b.

In operation S05, the eNB 92b may transmit the measured value to the UE 91b in response to the request of the UE 91b. In operation S10", the UE 91b may receive the measured value from the eNB 92b and may identify the delay between the eNB 92b and the en-gNB based on the received measured value. In some example embodiments, unlike in FIG. 9B, the UE 91b may not receive a response for the request from a BS. In some example embodiments, as described below with reference to FIGS. 10A and 10B, a delay between BSs may be measured by the UE 91b. In some example embodiments, UE 91b may request the first BS (e.g., eNB 92b) and the second BS (e.g., en-gNB) for information on the delay (e.g., the measured value) and, when a response including the information is not received, UE 91b may calculate the delay using the method described below with reference to FIGS. 10A and 10B.

FIGS. 10A and 10B are flowcharts illustrating examples of a method of improving or optimizing a buffer size in DC according to example embodiments of the inventive concepts. For example, the flowcharts of FIGS. 10A and 10B illustrate examples of operation S10 of FIG. 7 of identifying the delay between the BSs in the DC. In some example embodiments, operation S10a of FIG. 10A and operation S10b of FIG. 10B may be performed by the at least one processor 16 included in the UE 10' of FIG. 6. Hereinafter, FIGS. 10A and 10B will be described with reference to FIG. 6.

Referring to FIG. 10A, operation S10a may include a plurality of operations S11 to S13. In operation S11, a point in time at which first data is received may be logged and, in operation S12, a point in time at which second data is received may be logged. For example, the at least one processor 16 may store, in an internal register or the memory 18, the point in time at which the first data is received from the eNB 21' and the point in time at which the second data is received from the en-gNB 22'.

In operation S13, the delay may be calculated from a time difference. For example, the at least one processor 16 may calculate the delay between the eNB 21' and the en-gNB 22' from the time difference between the point in time at which the first data is received, which is stored in operation S11, and the point in time at which the second data is received, which is stored in operation S12.

Referring to FIG. 10B, operation S10b may include operation S14 and operation S15. In operation S14, a plurality of time differences may be collected. For example, the at least one processor 16 may calculate a plurality of time differences respectively corresponding to a plurality of RBs by repeatedly performing operation S11 and operation S12 of FIG. 10A and may store the plurality of calculated time differences in the memory 18.

In operation S15, the delay may be calculated based on the plurality of collected time differences. For example, the at least one processor 16 may read the plurality of time differences from the memory 18 and may statistically calculate the inter-BS delay from the plurality of time differences. When data throughput is high, for example, when a channel state between the UE 10' and the eNB 21' and/or the en-gNB 22' is good, hybrid automatic repeat request (HARQ) retransmission may hardly occur and variation among the plurality of collected time differences may be low. On the other hand, when the channel state between the UE 10' and the eNB 21' and/or the en-gNB 22' is bad, the variation among the plurality of collected time differences may be high. In some example embodiments, the at least one processor 16 may calculate the delay based on an average among the plurality of time differences.

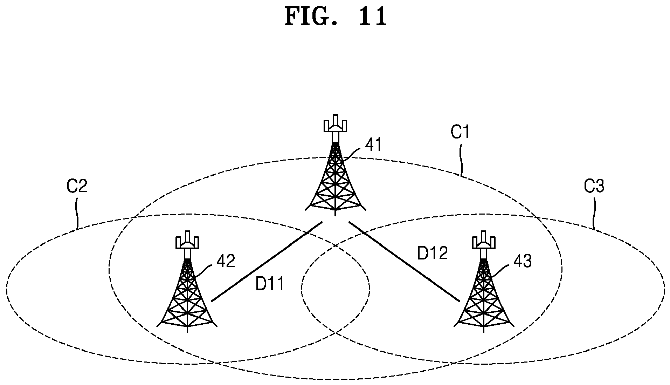

FIG. 11 is a view illustrating a radio access network (RAN) according to example embodiments of the inventive concepts. As illustrated in FIG. 11, the RAN may include a first BS 41 covering a first cell C1, a second BS 42 covering a second cell C2, and a third BS 43 covering a third cell C3 and UE may form DC with at least two BSs among the first BS 41, the second BS 42, and the third BS 43.

The identification of the inter-BS delay and the adjustment of the buffer size, which are described above with reference to the drawings, may be performed when handover occurs. That is, operation S10 and operation S30 of FIG. 7 may be triggered by the handover in the UE. For example, the UE may form the DC with the first BS 41 and the second BS 42 and may use a buffer having a size adjusted based on a first delay D11 between the first BS 41 and the second BS 42 for the DL data transmission. As the UE moves from the second cell C2 to the third cell C3, the handover may occur. The UE may identify a second delay D12 between the first BS 41 and the third BS 43 in order to form the DC with the first BS 41 and the third BS 43 and may adjust the buffer size based on the identified second delay D12. In some example embodiments, as described above with reference to FIGs. 9A and 9B, the UE may receive a measured value corresponding to the second delay D12 from the first BS 41 and/or the third BS 43 when the handover occurs. In addition, in some example embodiments, as described above with reference to FIGS. 10A and 10B, the UE may collect at least one time difference when the handover occurs and may calculate the second delay D12 based on the at least one collected time difference. The UE may reallocate regions of a memory to operations based on the buffer of the changed size.

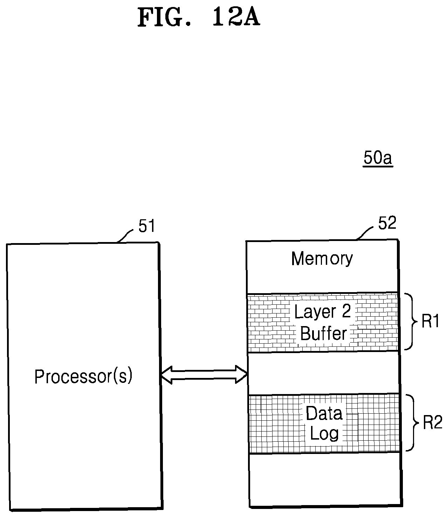

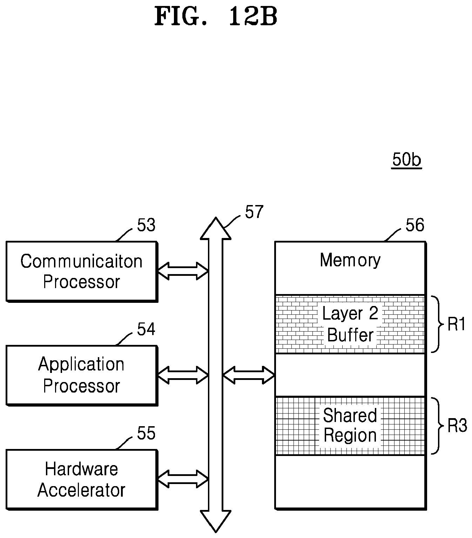

FIGS. 12A and 12B are block diagrams illustrating examples of device for wireless communication according to example embodiments of the inventive concepts. For example, each of the devices 50a and 50b of FIGS. 12A and 12B may be included in the first BS 21, the second BS 22, and/or the UE 10 of FIG. 1. Hereinafter, in FIGS. 12A and 12B, it is assumed that the devices 50a and 50b are included in the UE.

Referring to FIG. 12A, the device 50a may include at least one processor 51 and a memory 52. As described above with reference to the drawings, the at least one processor 51 may identify the delay between the BSs and may allocate a first region R1 of the memory 52 to the layer 2 buffer based on the identified delay. Therefore, the at least one processor 51 may store data in the first region R1 of the memory 52 in order to reorder data in the DC. The at least one processor 51 may allocate a second region R2 different from the first region R1 of the memory 52 to data logging. For example, the at least one processor 51 may use the second region R2 as at least a part of an region that is not allocated to a buffer, for logging events (or data) generated during wireless communication with a BS. When a short inter-BS delay is measured, the first region R1 may be reduced and the second region R2 may increase. Therefore, more events may be logged in the second region R2 of the memory 52 and, as a result, verification efficiency of the wireless communication system and/or debugging efficiency of the UE 10' may increase.

Referring to FIG. 12B, the device 50b may include a communication processor 53, an application processor 54, a hardware accelerator 55, a memory 56, and/or a bus 57 and the communication processor 53, the application processor 54, the hardware accelerator 55, and/or the memory 56 may communicate with one another through the bus 57.

The communication processor 53 may perform operations for the wireless communication with the BS. For example, the communication processor 53 may correspond to the at least one processor 16 included in the UE 10' of FIG. 6 and may be referred to as a modem or a BB processor. The communication processor 53 may generate BB data for transmitting data provided by the application processor 54 to the BS in a TX mode and may provide data generated by processing the BB data received from the BS in a RX mode to the application processor 54. Herein, the communication processor 53 may be referred to as a first processor.

The application processor 54 may control the device 50b and may communicate with the BS or another UE through the communication processor 53. In some example embodiments, the application processor 54 may include at least one core executing a series of instructions and may execute an operating system (OS) and a plurality of applications on the OS.

The hardware accelerator 55 may refer to a dedicated block designed to perform a specific function. For example, the hardware accelerator 55 may be designed in order to perform video encoding and decoding and neural processing at a high speed. The hardware accelerator 55 may include a logic block designed by logic synthesis and/or at least one core configured to execute a series of instructions. Herein, the application processor 54 and/or the hardware accelerator 55 may be referred to as second processors.

The memory 56 may be shared by at least two among the communication processor 53, the application processor 54, and the hardware accelerator 55. For example, as illustrated in FIG. 12B, the communication processor 53 may access the memory 56 through the bus 57 and may use the first region R1 of the memory 56 as the buffer for reordering the data in the DC. In addition, the application processor 54 and/or the hardware accelerator 55 may access the memory 56 through the bus 57 and may use a third region R3 of the memory 56 as a shared region. In an example embodiment, the third region R3 may be at least a part of an re gion of the memory 56 that is not allocated as a buffer. For example, the application processor 54 may store data to be provided to the hardware accelerator 55 in the third region R3 of the memory 56 and the hardware accelerator 55 may store data to be provided to the application processor 54 in the third region R3 of the memory 56. As described above with reference to the drawings, the communication processor 53 may identify the delay between the BSs and may allocate the first region R1 of the memory 56 to the layer 2 buffer based on the identified delay. When a short inter-BS delay is measured, the first region R1 may be reduced and the third region R3 may increase. Therefore, a shared region may increase in the memory 56 and, as a result, the performance of the device 50b may improve.

One or more of the elements disclosed above may include or be implemented in one or more processing circuitries such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

While the inventive concepts have been particularly shown and described with reference to example embodiments thereof, it will be understood that various changes in form and details may be made therein without departing from the scope of the following claims.

**Claims**

1. A device for wireless communication of user equipment (UE) in a dual connection system, the device comprising:

   a memory configured to provide buffer to store first data received from a first base station (BS) and second data received from a second BS; and
   a first processor configured to generate a radio bearer (RB) by reordering the first data and the second data and adjust a size of the buffer based on a delay between the first BS and the second BS.

2. The device of claim 1, wherein the first processor is further configured to identify the delay based on a measured value provided by the first BS.

3. The device of claim 2, wherein the measured value is included in at least one of radio resource control (RRC) signaling and medium access control (MAC) signaling.

4. The device of any preceding claim, wherein the first processor is further configured to calculate the delay based on a time difference between a point in time at which the first data is received and a point in time at which the second data is received.

5. The device of claim 4, wherein the first processor is further configured to calculate the delay based on a plurality of said time differences respectively corresponding to a plurality of RBs.

6. The device of any preceding claim, wherein the first data and the second data comprise packet data convergence protocol (PDCP) packet data units (PDU), and
   wherein the RB comprises a PDCP service data unit (SDU).

7. The device of any preceding claim, wherein the delay comprises an X2/Xn delay between the first BS and the second BS and comprises a delay due to queuing in the first BS or queuing in the second BS.

8. The device of any preceding claim, wherein the first processor is further configured to use at least a part of a region of the memory excluding the buffer, for data logging while performing the wireless communication.

9. The device of any preceding claim, further comprising:

   a bus connected to the memory and the first processor; and
   a second processor connected to the bus,
   wherein the second processor is configured to use at least a part of a region of the memory excluding the buffer.

10. A method performed by a first base station (BS) for wireless communication, the method comprising:

    forming dual connectivity (DC) with a second BS and user equipment (UE);
    identifying a delay between the first BS and the second BS; and
    transmitting a measured value corresponding to the identified delay to the UE.

11. The method of claim 10, wherein the identifying of the delay comprises:

    identifying an X2/Xn delay between the first BS and the second BS;
    identifying at least one of queuing in the first BS and queuing in the second BS, the queuing in the second BS being obtained from the second BS; and
    calculating the delay between the first BS and the second BS based on at least one of the X2/Xn delay, the queuing in the first BS, and the queuing in the second BS.

12. The method of claim 10 or 11, wherein the measured value is included in at least one of radio resource control (RRC) signaling and medium access control (MAC) signaling.

**13.** The method of any one of claims 10 to 12, further comprising:

receiving first data from the UE;
receiving second data from the UE through the second BS; and
generating a radio bearer (RB) by reordering the first data and the second data,
wherein the identifying of the delay comprises calculating a delay between the first BS and the second BS based on a time difference between a point in time at which the first data is received and a point in time at which the second data is received.

**14.** The method of any one of claims 10 to 13, wherein the transmitting of the measured value to the UE is performed when handover of the UE occurs.

**15.** The method of any one of claims 10 to 14, further comprising receiving a request for the measured value from the UE, wherein the transmitting of the measured value to the UE is performed in response to the request from the UE.

# FIG. 1

# FIG. 2

EP 3 962 162 A2

# FIG. 3

PDCP_PDU1 | 1 | 2 | 3 | 4 | 5 | 11 | 12 | 13 | 17 | 18 | 19

PDCP_PDU2 ◄———————— D30 ————————► | 6 | 7 | 8 | 9 | 10

t31        t32        Time

# FIG. 4A

# FIG. 4B

# FIG. 5A

# FIG. 5B

# FIG. 6

# FIG. 7

START

IDENTIFY DELAY BETWEEN FIRST BASE STATION AND SECOND BASE STATION — S10

ADJUST BUFFER SIZE — S30

RECEIVE FIRST DATA AND SECOND DATA — S50

STORE FIRST DATA AND SECOND DATA IN BUFFER — S70

GENERATE RADIO BEARER — S90

END

FIG. 8

# FIG. 9A

```
┌─────┐
│ eNB │──92a                    ┌────┐
└─────┘                          │ UE │──91a
   │                             └────┘
   │                                │
┌──────────────────────┐            │
│ FORM DUAL CONNECTIVITY│──S01       │
└──────────────────────┘            │
   │                                │
┌──────────────────────┐            │
│    IDENTIFY DELAY     │──S02       │
└──────────────────────┘            │
   │                                │
   │   TRANSMIT MEASURED VALUE──S03  │
   │────────────────────────────────▶│
   │                                │
   │                   ┌────────────────────┐
   │                   │   IDENTIFY DELAY    │──S10'
   │                   └────────────────────┘
   │                                │
```

# FIG. 9B

# FIG. 10A

```
                              S10a
       ┌─────────┐
       │  START  │
       └─────────┘
            │
   ┌────────┴────────┐
   ▼                 ▼
┌──────────────────┐   ┌──────────────────┐
│ LOG POINT IN TIME│   │ LOG POINT IN TIME│
│ AT WHICH FIRST   │─S11│ AT WHICH SECOND  │─S12
│ DATA IS RECEIVED │   │ DATA IS RECEIVED │
└──────────────────┘   └──────────────────┘
   │                 │
   └────────┬────────┘
            ▼
     ┌──────────────┐
     │ CALCULATE    │
     │ DELAY FROM   │─S13
     │ TIME DIFFERENCE│
     └──────────────┘
            │
            ▼
       ┌─────────┐
       │   END   │
       └─────────┘
```

# FIG. 10B

FIG. 11

# FIG. 12A

50a

51

52

Memory

Processor(s) ⟷ Layer 2 Buffer } R1

Data Log } R2

# FIG. 12B

50b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR; User Equipment (UE) radio access capabilities (Release 16). *3GPP TS 38.306*